# EUROPEAN PATENT SPECIFICATION

(11) **EP 1 741 507 B1**
(45) Date of publication and mention of the grant of the patent: **29.05.2013**
(21) Application number: 06445048.9
(22) Date of filing: 20.06.2006
(51) Int. Cl.: B23B 51/02

(54) **Twist drill**
Spiralbohrer
Foret hélicoïdal

(30) Priority: 05.07.2005 SE 0501562
(43) Date of publication of application: 10.01.2007
(73) Proprietor: Sandvik Intellectual Property AB, 811 81 Sandviken (SE)
(72) Inventor: Lenander, Anders, 135 53 Tyresö (SE)
(74) Representative: Taquist, Henrik Lennart Emanuel

(56) References cited:
- EP-A- 1 203 828
- EP-B1- 0 127 009
- EP-B1- 0 891 239
- US-A- 2 966 081
- US-A1- 2003 175 085
- US-A1- 2003 188 895
- US-A1- 2005 135 889

## Description

The present invention relates to a twist drill for metal cutting operations. Such drills normally have a cylindrical basic component which is divided into a shaft and a cutting portion. Chip flutes are made in the surface of the cutting portion. The drill has main cutting edges and leading edges.

A twist drill of cemented carbide is manufactured from a cylindrical blank which is machined by grinding to a desired shape and dimension in particular to form cutting edges and flutes. As a result of the grinding sharp edges are formed.

EP 0127 009 B 1 discloses a drill for metal cutting made of solid cemented carbide and having the features of the preamble of clam 1. The construction of the drill compensates for the brittleness of cemented carbide to increase cross-break strength while decreasing cutting resistance and improves the chip ejecting function. The drill will have an increased twisting and bending rigidity and also a decreased cutting resistance. The radius of curvature of the cutting lips is in the range of 0.03-0.2 mm and a chamfered portion intersection between the outer and inner peripheral surfaces has a radius of curvature in the range of 0.3% to 1.5% of the drill diameter.

US 2003/0188895 A1 discloses a method of making a twist drill for metal cutting having the features of the preamble of claim 6.

Solid cemented carbide drills are often most worn at the periphery of che cutting edge. This may be explained by the fact that the cutting speed is higher in the periphery and consequently continuous wear mechanisms act more rapidly due to the higher temperature generated in this zone. However, discontinuous wear mechanism is often the cause of the wear in the periphery, e.g. adhesion wear acting at the main cutting edge can in the end cause breakage of the edge. In order to suppress the adhesion wear, the cutting edges are made as sharp as possible to reduce the cutting forces.

It is an object of the present invention to provide a twist drill with increased tool life.

It is a further object of the present invention to provide a twist drill with reduced wear in the corner between the main cutting edge and the leading edge.

It is yet a further object to provide a method of making a . twist drill with increased tool life. The invention is defined by a twist drill for metal cutting according to claim 1, by a method of making a twist drill for metal cutting according to claim 6 and by a use of a twist drill according to claim 10. Preferred embodiments of the twist drill and of the method of making a twist drill according to the invention are further defined in the dependent claim 2-5 and 7-9.

It has now surprisingly been found that a twist drill with improved tool life is obtained if the leading edge near the corner is subjected to an edge rounding operation.

Fig. 1 is a twist drill according to an embodiment of the invention;

Fig. 2 shows in about 20X magnification the wear pattern of a twist drill according to the invention; and

Fig. 3 shows in about 20X magnification the wear pattern of a twist drill according to prior art.

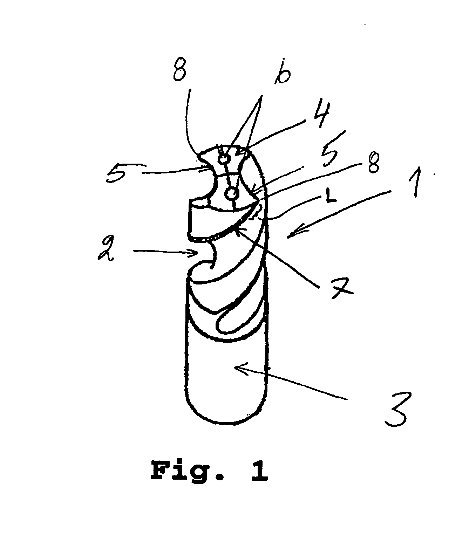

In a twist drill according to invention as shown in Fig. 1 the drill 1 is made of solid cemented carbide and includes helical chip flutes 2 extending through the entire drill body or through a part thereof. The drill has a shank 3 to be secured to a rotary spindle, not shown. The drill has two upper clearance surfaces 4, two main cutting edges 5 and two leading edges 7. The drill may be provided with two flush channels 6 extending through the entire drill to transfer flushing medium from the spindle to the tip of the drill.

The main cutting edges 5 are as sharp as possible with an edge radius of <10 µm. The leading edges 7 near respective corners 8 formed with the cutting edges 5 have an edge radius larger than that of the cutting edge, preferably at least twice the size of the edge radius for the cutting edge and between 10 and 200 µm, preferably between 10 and 100 µm. The length L of the leading edge subjected to rounding is at least 1 mm, preferably 3 mm and less than 10 mm.

The drill may be uncoated, or provided with a single or multiple coating, as known in the art.

The present invention also provides a method of making twist drills, including providing a cylindrical blank, machining the blank to form a twist drill 1 including chip flutes 2 and leading edges 7 by grinding. According to the invention the leading edges 7, near the corner 8 to the cutting edges 5, are subsequently subjected to an edge rounding operation to an edge radius larger than that of the cutting edge, preferably at least twice the size of the edge radius for the cutting edge and between 10 and 200 µm, preferably between 10 and 100 µm. The length L of the leading edge subjected to rounding is at least 1 mm, preferably 3 mm and less than 10 mm.

The invention further provides the use of the drill 1 for drilling in steel and stainless steel at a typical cutting speed Vc = 50-150 m/min and feed f = 0.10-0.50 mm/rev.

The invention has been described with reference to a twist drill with two cutting and leading edges but it obvious that it can as well be applied to twist drills with three or more such edges.

### Example 1

A number of cemented carbide twist drills with diameter 8 mm with the composition WC=89.5 wt-%, Co=10.0 wt-% and Cr₃C₂=0.45 wt-%, and having a hardness of 1600 HV3, manufactured according to standard procedure were selected with sharp cutting and leading edges. Half of the drills were subjected to a further edge rounding operation of the leading edges to an edge radius of 30-50 µm at a distance of 3 mm from the corner to the cutting edges. All the drills were then coated with a 3 µm thick PVD coating type TiA1N in the same coating batch.

### Example 2

The twist drills from Example 1 were subjected to a machining test in steel with the following test conditions:
Work material: Tough hardened steel SS2244 (similar to AISI 4140).
Cutting data:

| | | |
|---|---|---|
| Cutting speed, | Vc= | 70 m/min |
| Feed | f= | 0.15 mm/rev |
| Depth of hole | a= | 18 mm, through holes |

Tool life criteria: Breakage at the corner between the cutting edge and leading edge.

The following results were obtained:

| | Tool life Number of holes |
|---|---|
| Drills according to prior art: | 250 and 200 |
| Drills according to the invention | 1300 and 1350 |

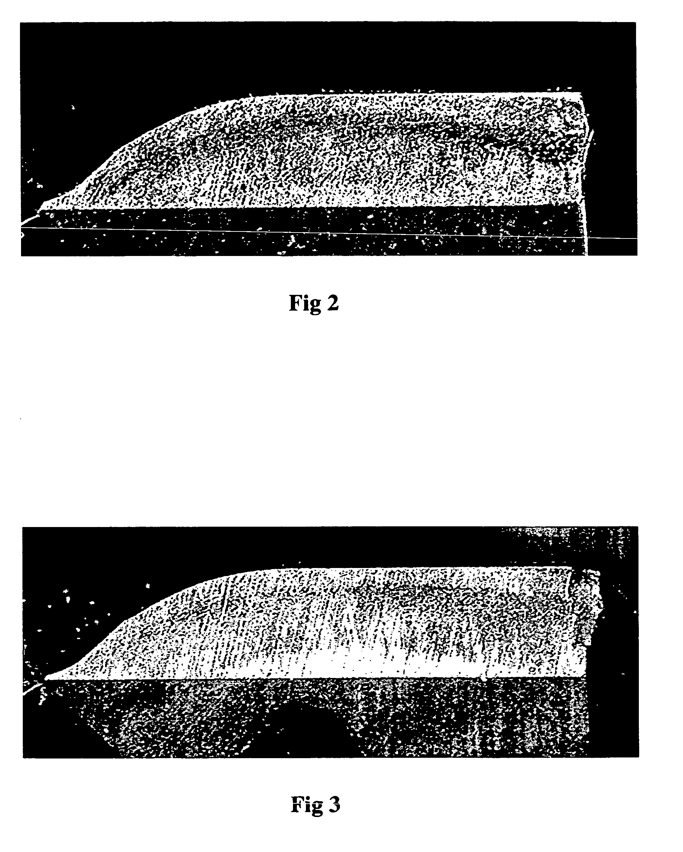

A typical wear pattern of drills according to the invention after 500 holes is shown in Fig. 2 and that of a prior art drill after 200-250 holes in Fig. 3.

## Claims

1. Twist drill for metal cutting made of solid cemented carbide including helical chip flutes (2) extending through the entire body or a part thereof, a shank (3) to be secured to a rotary spindle, two main cutting edges (5) and two leading edges (7) **characterized in that** the leading edges (7) have a larger edge radius than that of the main cutting edges (5), and **in that** said larger edge radius of a leading edge extends a length L, and L is at least 1 mm and less than 10 mm.

2. Twist drill according to claim 1 **characterized in that** the leading edges (7) radius is more than twice as large as the edge radius of the main cutting edges(5).

3. Twist drill according to any of the preceding claims **characterised in that** the cutting edges have an edge radius of <10 µm.

4. Twist drill according to any of the preceding claims **characterised in that** the leading edges have an edge radius of 10-200 µm.

5. Twist drill according to any of the preceding claims **characterised in that** the edge rounding of the leading edge extends at least 3 mm from the corner.

6. Method of making a twist drill for metal cutting made of a solid cemented carbide body by grinding at least two helical chip flutes (2) extending through the entire body or a part thereof, a shank (3) to be secured to a rotary spindle, two main cutting edges (5) and two leading edges (7) **characterized in that** said leading edges are subjected to a subsequent edge rounding operation to an edge radius larger than that of the cutting edges (5), and **in that** the larger edge radius of a leading edge extends at least 1 mm and less than 10 mm.

7. Method according to claim 6 **characterized in that** the leading edges (7) radius is more than twice as large as the edge radius of the main cutting edges (5).

8. Method according to claim 6 **characterised in that** the cutting edges have an edge radius of <10 µm.

9. Method according to any of claims 6, 7 and 8 **characterised in that** the leading edges have an edge radius of 10-200 µm.

10. Use of a twist drill according to claims 1-5 for drilling in steel and stainless steel at a cutting speed of 50-150 m/min and at a feed of 0.10-0.50 mm/rev.

## Patentansprüche

1. Spiralbohrer für die Metallbearbeitung und hergestellt aus Vollhartmetall, mit schraubenförmigen Spannuten (2), die sich um den gesamten Korpus oder eines Teiles desselben erstrecken, einem Schaft (3), der an einer Drehspindel befestigt werden kann, zwei Hauptschneidkanten (5) und zwei Führungskanten (7), **dadurch gekennzeichnet, dass** die Führungskanten (7) einen größeren Kantenradius haben als die Hauptschneidkanten (5) und dass der größere Kantenradius einer Führungskante sich über eine Länge L erstreckt und L zumindest 1 mm und weniger als 10 mm beträgt.

2. Spiralbohrer nach Anspruch 1, **dadurch gekennzeichnet, dass** der Kantenradius der Führungskanten (7) mehr als das zweifache des Kantenradius der Hauptschneidkanten (5) beträgt.

3. Spiralbohrer nach einem der vorstehenden Ansprüche, **dadurch gekennzeichnet, dass** die Schneidkanten einen Kantenradius von weniger als 10 µm haben.

4. Spiralbohrer nach einem der vorstehenden Ansprüche, **dadurch gekennzeichnet, dass** die Führungskanten einen Kantenradius zwischen 10 und 200 µm haben.

5. Spiralbohrer nach einem der vorstehenden Ansprüche, **dadurch gekennzeichnet, dass** die Kantenabrundung der Führungskanten sich von der Ecke aus über zumindest 3 mm erstreckt.

6. Verfahren zum Herstellen eines Spiralbohrers für die Metallbearbeitung, wobei der Bohrer aus einem Korpus aus Vollhartmetall hergestellt ist, in den zumindest zwei schraubenförmige Spannuten (2) eingeschliffen werden, die sich über den gesamten Korpus oder einen Teil desselben erstrecken, mit einem Schaft (3), der an einer Drehspindel zu befestigen ist, zwei Hauptschneidkanten (5) und zwei Führungskanten (7), **dadurch gekennzeichnet, dass** die Führungskanten einem nachfolgenden Kantenrundungsvorgang ausgesetzt werden bis zu einem Kantenradius, der größer ist als der der Schneidkanten (5), und dass der größere Kantenradius einer Führungskante sich über zumindest 1 mm und weniger als 10 mm erstreckt.

7. Verfahren nach Anspruch 6, **dadurch gekennzeichnet, dass** der Radius der Führungskanten (7) mehr als das zweifache des Kantenradius der Hauptschneidkanten (5) beträgt.

8. Verfahren nach Anspruch 6, **dadurch gekennzeichnet, dass** die Schneidkanten einen Kantenradius von weniger als 10 µm haben.

9. Verfahren nach einem der Ansprüche 6, 7 und 8, **dadurch gekennzeichnet, dass** die Führungskanten einen Kantenradius von 10 bis 200 µm haben.

10. Verwendung eines Spiralbohrers nach einem der Ansprüche 5 zum Bohren in Stahl und rostfreiem Stahl mit einer Schneidgeschwindigkeit von 50 - 150 m/min und einem Vorschub von 0,10 - 0,50 mm/Umdrehung.

## Revendications

1. Foret hélicoïdal pour la découpe du métal, réalisé à partir de carbure cémenté solide comprenant des cannelures de copeaux hélicoïdales (2) s'étendant sur tout le corps ou sur une partie de ce dernier, une tige (3) destinée à être fixée sur un axe rotatif, deux bords de coupe principaux (5) et deux bords d'attaque (7), **caractérisé en ce que** les bords d'attaque (7) ont un plus grand rayon de bord que celui des bords de coupe principaux (5), et **en ce que** ledit plus grand rayon de bord d'un bord d'attaque s'étend sur une longueur L, et la longueur est d'au moins 1 mm et inférieure à 10 mm.

2. Foret hélicoïdal selon la revendication 1, **caractérisé en ce que** le rayon des bords d'attaque (7) représente plus de deux fois le rayon de bord des bords de coupe principaux (5).

3. Foret hélicoïdal selon l'une quelconque des revendications précédentes, **caractérisé en ce que** les bords de coupe ont un rayon de bord < 10 µm.

4. Foret hélicoïdal selon l'une quelconque des revendications précédentes, **caractérisé en ce que** les bords d'attaque ont un rayon de bord de 10 - 200 µm.

5. Foret hélicoïdal selon l'une quelconque des revendications précédentes, **caractérisé en ce que** l'arrondissement de bord du bord d'attaque s'étend sur au moins 3 mm du coin.

6. Procédé pour fabriquer un foret hélicoïdal pour la découpe de métal, réalisé à partir d'un corps plein en carbure cémenté, en meulant au moins deux cannelures de copeaux hélicoïdales (2) s'étendant sur tout le corps ou une partie de ce dernier, une tige (3) destinée à être fixée à un axe rotatif, deux bords de coupe principaux (5) et deux bords d'attaque (7), **caractérisé en ce que** lesdits bords d'attaque sont soumis à une opération d'arrondissement de bord consécutive sur un rayon de bord supérieur à celui des bords de coupe (5) et **en ce que** le plus grand rayon de bord d'un bord d'attaque s'étend au moins sur 1 mm et sur moins de 10 mm.

7. Procédé selon la revendication 6, **caractérisé en ce que** le rayon des bords d'attaque (7) représente plus de deux fois le rayon de bord des bords de coupe principaux (5).

8. Procédé selon la revendication 6, **caractérisé en ce que** les bords de coupe ont un rayon de bord < 10 µm.

9. Procédé selon l'une quelconque des revendications 6, 7 et 8, **caractérisé en ce que** les bords d'attaque ont un rayon de bord de 10 - 200 µm.

10. Utilisation d'un foret hélicoïdal selon les revendications 1 à 5 pour percer l'acier et l'acier inoxydable à une vitesse de coupe de 50 - 150 m/mn et à une avance de 0,10 - 0,50 mm/rev.
